# EUROPEAN PATENT APPLICATION

(11) **EP 2 455 840 A1**
(43) Date of publication of application: **23.05.2012**
(21) Application number: 10195720.7
(22) Date of filing: 17.12.2010
(51) Int. Cl.: G06F 3/01

(54) **Communication device and method**

(30) Priority: 02.11.2010 US 409140 P
(71) Applicant: Sony Ericsson Mobile Communications AB, 221 88 Lund (SE)
(72) Inventor: Klinghult, Gunnar, 223 59, Lund (SE)
(74) Representative: VALEA AB

(57) **Abstract**

The invention relates to a user interaction arrangement for interaction with a user using a pointing object. The arrangement comprises: at least one transmitter for generating a signal and at least one receiver for receiving a signal in response to remote detection of said object, characterised in that the transmitted signal is modulated to carry data to be received by said or other remote object.

## Description

### TECHNICAL FIELD

Implementations described herein relate generally to communication devices, and more particularly, to communication devices that may provide detect an object in vicinity and exchange data in response to detection.

### BACKGROUND

Devices, such as handheld mobile communication devices, conventionally include input arrangements that provide some form of tactile feedback to a user indicating that an action has been detected by the communication device. These are usually used in for example keystroke.

Three-dimensional sensing in a volume above the display of a device to detect gesture together with suitable user interface (UI) is supposed to become popular. The UI may be 3D as well and also be used together with a 3D display or a projector.

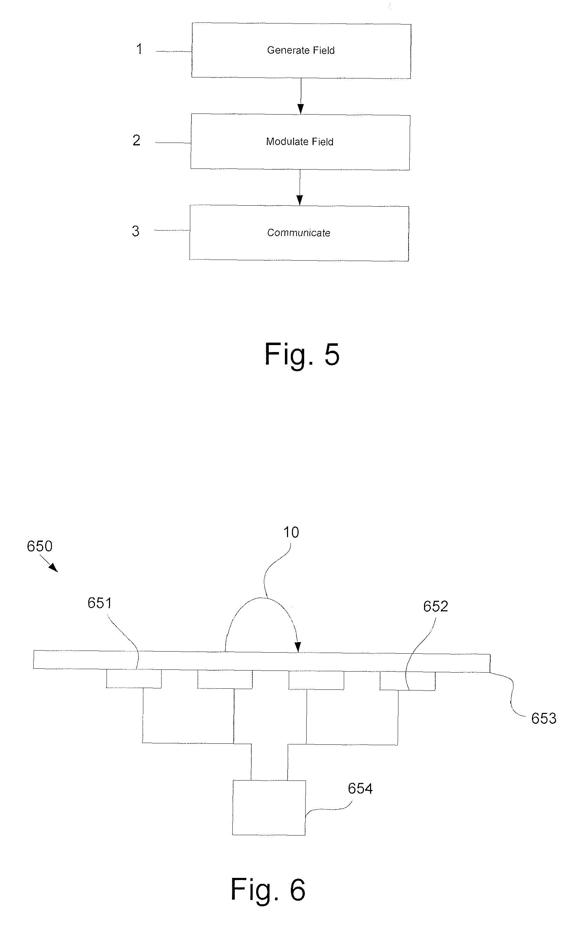

One method is to sense an object, e.g. a users hand, in a 3D volume is to use capacitive or electric field sensing. Fig. 6 illustrates a device 650 for capacitive and electric field sensing based on transmitting a signal 10 by means of one or several electrodes 651 and then receiving the response with another electrode(s) 652. The electrodes may be arranged behind a display layer 653 and controlled by a controller 654. If an object is close enough to the touch surface, a change in the capacitive coupling between the electrodes and the ground will be detected as the received signal strength will change.

However, the solutions provided today address the reception of data and do not provide a sufficient tactile feedback, especially a haptic feedback.

### SUMMARY

Thus, an object of the present invention is to solve the above mentioned problem and also present a novel communication method.

Thus, a user interaction arrangement for interaction with a user using a pointing object is provided. The arrangement comprises: at least one transmitter for generating a signal and at least one receiver for receiving a signal in response to remote detection of said object. The transmitted signal is modulated to carry data to be received by said or other remote object. A signal may be modulated by the remote object to carry data to be received by the arrangement. The signals are electromagnetic, including one or several of optical or radio waves. The arrangement may comprise a capacitive electric field generator and receiver. The arrangement may comprise an optical transmitter and receiver. The transmitted signal comprises instructions for generating a feedback event. The signal modulation is analogue and/or digital.

The invention also relates to an electric device comprising a display, a communication portion and a user interaction arrangement comprising: at least one transmitter for generating a signal and at least one receiver for receiving a signal. The arrangement is configured to detect a pointing object used by said user for interact with said device, the received signal being in response to a detected remote object. The transmitted signal is modulated by the communication portion to carry data to be received by said or other remote object. The device may be one of a mobile communication terminal, a camera, a global positioning system (GPS) receiver; a personal communications system (PCS) terminal, a personal digital assistant (PDA); a personal computer, a home entertainment system or a television screen.

The invention also relates to a device configured to be detected by means of an optical and/or electrical signal transmitted from a detecting device interacting with a user. A receiver is configured for receiving the optical and/or electrical signal, which comprises modulated data and a processing unit for demodulating the signal. The device may further comprise means for generating a modulated signal for transmission to the detecting device. The device may further comprise a portion to generate an action with respect to received data. The action may be a haptic feedback. The device may be one or several of a device built in into a user's cloths, a stylus, a watch, glove, ring, etc.

The invention also relates to a method or providing data to a remote object, the method comprising: generating a signal for detecting the object, upon detection of the object transmitting the data over the signal by modulating the signal.

### BRIEF DESCRIPTION OF THE DRAWINGS,

The accompanying drawings, which are incorporated in and constitute a part of this specification, illustrate an embodiment of the invention and, together with the description, explain the invention. In the drawings,
- Fig. 1: is a diagram of an exemplary implementation of a mobile terminal;
- Fig. 2: illustrates an exemplary functional diagram of the logic of Fig. 1;
- Fig. 3: is a diagram of an exemplary system implementation of a mobile terminal and a feedback element,
- Fig. 4: is another diagram of an exemplary system implementation of a mobile terminal and a feedback element,
- Fig. 5: is a flowchart of exemplary processing,
- Fig. 6: is a diagram of a known object detection system, and
- Fig. 7: is a diagram of an exemplary second embodiment of a system implementation.

### DETAILED DESCRIPTION

The following detailed description of the invention refers to the accompanying drawings. The same reference numbers in different drawings may identify the same or similar elements. Also, the following detailed description does not limit the embodiments.

Exemplary implementations of the embodiments will be described in the context of a mobile communication terminal. It should be understood that a mobile communication terminal is an example of a device that can employ a keypad consistent with the principles of the embodiments and should not be construed as limiting the types or sizes of devices or applications that can use implementations of heptic feedback. A "device" as the term is used herein, is to be broadly interpreted to include devices having ability for 3D detection, such as a camera (e.g., video and/or still image camera) screen, and/or global positioning system (GPS) receiver; a personal communications system (PCS) terminal that may combine a cellular radiotelephone with data processing; a personal digital assistant (PDA); a laptop; and any other computation device capable of detecting a remote object, such as a personal computer, a home entertainment system, a television, etc. The term 3D sensing or detection as used herein relates to ability of detecting an object remotely in vicinity of the device using a radio or optical detection signal.

The invention generally relates to using a signal for detecting a remote object for communication with the object. The signal may be a radio signal or optical signal. The object may in turn communicate using the signal. To communicate, the signal is modulated for transporting communication data. The term "modulate" as used herein is to be interoperated broadly to include varying the frequency, amplitude, phase, or other characteristic of electromagnetic waves to carry data.

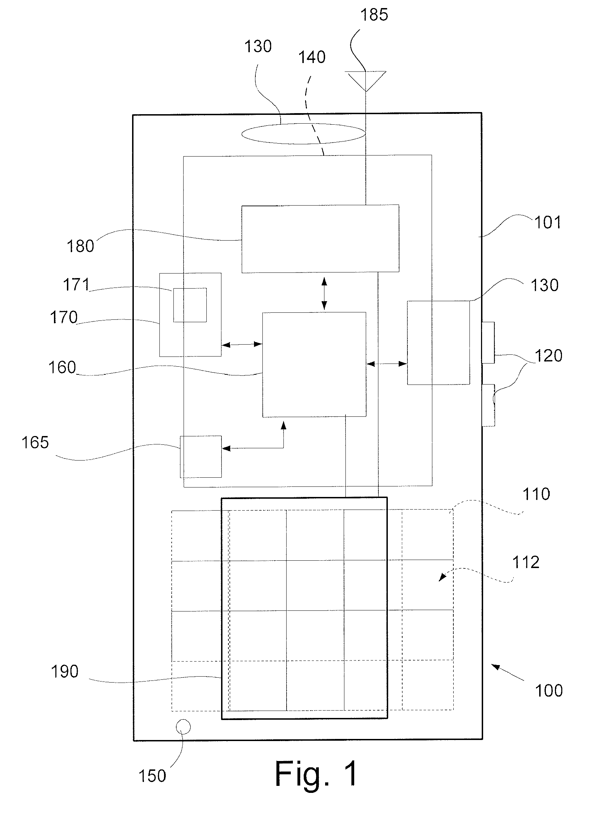

Fig. 1 is a diagram of an exemplary implementation of a mobile terminal consistent with the principles of the invention. Mobile terminal 100 (hereinafter terminal 100) may be a mobile communication device. As used herein, a "mobile communication device" and/or "mobile terminal" may include a radiotelephone; a personal communications system (PCS) terminal that may combine a cellular radiotelephone with data processing, a facsimile, and data communications capabilities; a personal digital assistant (PDA) that can include a radiotelephone, pager, Internet/intranet access, web browser, organizer, calendar, and/or global positioning system (GPS) receiver; and a laptop and/or palmtop receiver or other appliance that includes a radiotelephone transceiver.

Terminal 100 may include housing 101, input area 110, control keys 120, speaker 130, display 140, and microphones 150. Housing 101 may include a structure configured to hold devices and components used in terminal 100. For example, housing 101 may be formed from plastic, metal, or composite and may be configured to support input area 110, control keys 120, speaker 130, display 140 and microphones 150. The input area may be physical structure comprising a number of keys or may be integrated with the display in form of a touch-screen.

The input area 110 may include devices and/or logic that can be used to display images to a user of terminal 100 and to receive user inputs in association with the displayed images. For example, a number of keys 112 may be displayed via input area 110 on the display. Implementations of input area 110 may be configured to receive a user input when the user interacts with keys 112. For example, the user may provide an input to input area 110 directly, such as via the user's finger, or via other devices, such as a stylus. User inputs received via area 110 may be processed by components or devices operating in terminal 100.

In one implementation, the input area 110 may be a virtual keypad generated on the display. In one embodiment, character information associated with each of keys 112 may be displayed via a liquid crystal display (LCD).

Functions of the control keys 120, display 140, and speaker 130, microphone 150 are assumed well known for a skilled person and not described in detail.

As shown in Fig. 1, terminal 100 may further include processing logic 160, storage 165, user interface logic 170, which may include keypad logic (not shown) and input/output (I/O) logic 171, communication interface 180, antenna assembly 185, and power supply 190.

Processing logic 160 may include a processor, microprocessor, an application specific integrated circuit (ASIC), field programmable gate array (FPGA), or the like. Processing logic 160 may include data structures or software programs to control operation of terminal 100 and its components. Implementations of terminal 100 may use an individual processing logic component or multiple processing logic components (e.g., multiple processing logic 160 devices), such as processing logic components operating in parallel. Storage 165 may include a random access memory (RAM), a read only memory (ROM), a magnetic or optical disk and its corresponding drive, and/or another type of memory to store data and instructions that may be used by processing logic 160.

User interface logic 170 may include mechanisms, such as hardware and/or software, for inputting information to terminal 100 and/or for outputting information from terminal 100.

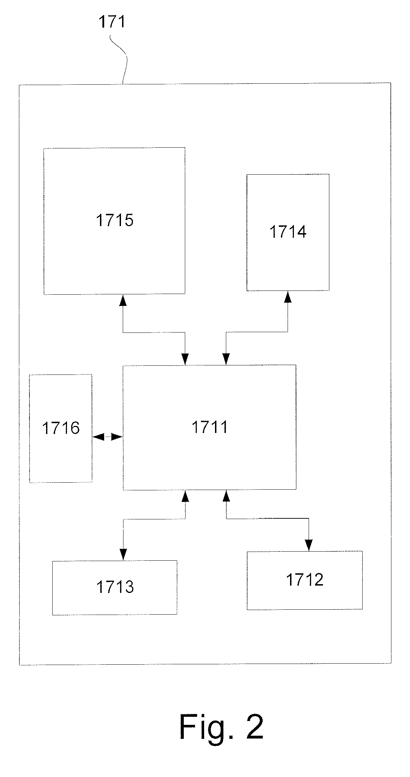

Keypad logic, if implemented, may include mechanisms, such as hardware and/or software, used to control the appearance of input area 110 (real or displayed) and to receive user inputs via input area. For example, keypad logic may change displayed information associated with keys using an LCD display. I/O logic 171 is described in greater detail below with respect to Fig. 2.

Input/output logic 171 may include hardware or software to accept user inputs to make information available to a user of terminal 100. Examples of input and/or output mechanisms associated with input/output logic 171 may include a speaker (e.g., speaker 130) to receive electrical signals and output audio signals, a microphone (e.g., microphone 150) to receive audio signals and output electrical signals, buttons (e.g., control keys 120) to permit data and control commands to be input into terminal 100, and/or a display (e.g., display 140) to output visual information.

Communication interface 180 may include, for example, a transmitter that may convert base band signals from processing logic 160 to radio frequency (RF) signals and/or a receiver that may convert RF signals to base band signals. Alternatively, communication interface 180 may include a transceiver to perform functions of both a transmitter and a receiver. Communication interface 180 may connect to antenna assembly 185 for transmission and reception of the RF signals. Antenna assembly 185 may include one or more antennas to transmit and receive RF signals over the air. Antenna assembly 185 may receive RF signals from communication interface 180 and transmit them over the air and receive RF signals over the air and provide them to communication interface 180.

Power supply 190 may include one or more power supplies that provide power to components of terminal 100.

As will be described in detail below, the terminal 100, consistent with the principles described herein, may perform certain operations relating to providing inputs via interface area 110 or entire display in response to user inputs or in response to processing logic 160. Terminal 100 may perform these operations in response to processing logic 160 executing software instructions of an output configuration/reprogramming application contained in a computer-readable medium, such as storage 165. A computer-readable medium may be defined as a physical or logical memory device and/or carrier wave.

The software instructions may be read into storage 165 from another computer-readable medium or from another device via communication interface 180. The software instructions contained in storage 165 may cause processing logic 160 to perform processes that will be described later. Alternatively, hardwired circuitry may be used in place of or in combination with software instructions to implement processes consistent with the principles described herein. Thus, implementations consistent with the principles of the embodiments are not limited to any specific combination of hardware circuitry and software.

Fig. 2 illustrates an exemplary functional diagram of the I/O logic 171 of Fig. 1 consistent with the principles of the embodiments. I/O logic 171 may include control logic 1711, display logic 1712, illumination logic 1713, position sensing logic 1714 and haptic feedback activation logic 1715 and electrode (sensor) controller logic 1716 (c.f. controller 554 in Fig. 5), according to the invention. According to one embodiment the haptic feedback activation logic may only be incorporated in the receiving object.

Control logic 1711 may include logic that controls the operation of display logic 1712, and receives signals from position sensing logic 1714. Control logic 1711 may determine an action based on the received signals from position sensing logic 1714. The control logic 1711 may be implemented as standalone logic or as part of processing logic 160. Moreover, control logic 1711 may be implemented in hardware and/or software.

Display logic 1712 may include devices and logic to present information via display to a user of terminal 100. Display logic 1712 may include processing logic to interpret signals and instructions and a display device having a display area to provide information. Implementations of display logic 1712 may include a liquid crystal display (LCD) that includes, for example, biphenyl or another stable liquid crystal material. In this embodiment, keys 112 may be displayed via the LCD.

Illumination logic 1713 may include logic to provide backlighting to a lower surface of display and input area 110 in order to display information associated with keys 112. Illumination logic 1713 may also provide backlighting to be used with LCD based implementations of display logic 1712 to make images brighter and to enhance the contrast of displayed images. Implementations of illumination logic 1713 may employ light emitting diodes (LEDs) or other types of devices to illuminate portions of a display device. Illumination logic 1713 may provide light within a narrow spectrum, such as a particular color, or via a broader spectrum, such as full spectrum lighting. Illumination logic 1713 may also be used to provide front lighting to an upper surface of a display device that faces a user.

Position sensing logic 1714 may include logic that senses the position and/or presence of an object within input area 110. It may also be used for detecting position of other input devices, such as remote wearable sensors. Implementations of position sensing logic 1714 may be configured to sense the presence and location of an object. For example, position sensing logic 1714 may be configured to determine a location of an stylus or a finger of a user in the input area 110, or a remote object provided with detectors, on which a user may place his/her finger or a pointing object. Implementations of position sensing logic 1714 may use capacitive and/or resistive techniques to identify the presence of an object and to receive an input via the object. Position sensing logic 1714 may also include logic that sends a signal to the haptic feedback activation logic 1715 in response to detecting the position and/or presence of an object within input area 110. The above example allows for both two and three-dimensional detection.

Feedback activation logic 1715 may include mechanisms and logic to provide activation signal to a feedback element via control logic 1716 included in the device or separated from the device 100, which when activated, provides a haptic sensation that may provide tactile feedback to a user of terminal 100. For example, feedback activation logic 1715 may receive a signal from the position sensing logic 1714 and in response to this signal, provide a current and/or voltage signal to activate a feedback element or use communication interface to transmit activation signal to an external feedback device using a modulated detection signal as explained below.

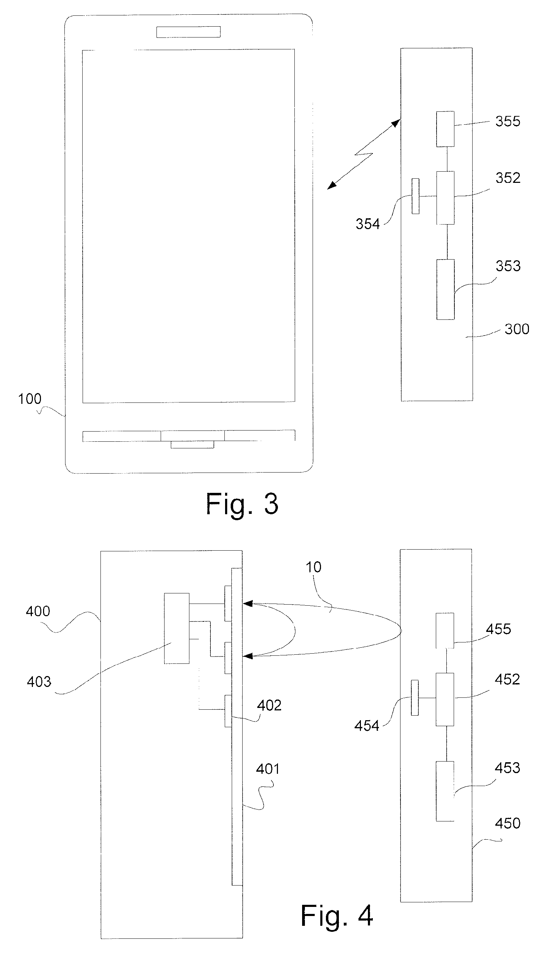

Fig. 3 illustrates a haptic feedback system according to the invention. The system comprises a device 100 according to above described embodiment in conjunction with Fig. 1 and haptic feedback element 300.

The feedback element 300 may comprise at least one capacitive element 354 coupled to a driver 352 and radio receiver/transmitter 353. Electromechanical elements 355 may be used to generate haptic feedback.

According to the invention in one embodiment by modulating a transmitted radio signal (see reference number 10 in fig. 4), information can be transmitted to and from the communication device 100 to the haptic feedback element 300.

It is also possible to use the receiving part of a capacitive or electric field sensing system to receive a response from the nearby device, e.g. using modulated signals.

The used frequency of the transmitter may be low (e.g. 1 - 1000 kHz, especially 100-200 KHz) to keep the power consumption low, so the possible bandwidth and range may be low. This communication is however good enough for low range low speed communication.

This communication may typically be used to communicate with wearable sensors (such as element 300), able to read medical and motion related sensors.

The invention allows transmitting signal enabling haptic feedback to a device, e.g. worn by the user. This would permit haptic feedback for 3D gesture control. The device providing haptic feedback could be built in into the user's cloths, stylus, watch, gloves, ring, etc.

By using the same system that detects the gesture to control the haptic feedback, a much faster response than other systems may be possible.

Figs. 4 and 5 Illustrates a method and a communication between a communication terminal 400 and a feedback element 450. The terminal 400 comprises electrodes 402, e.g. behind a screen layer 401. The feedback element 450 may comprise at least one sensing element 454 coupled to a driver 452 and radio receiver/transmitter 453. Electromechanical elements 455 may be used to generate haptic feedback.

The electrodes 402 are controlled by a controller 403. The electrodes generate (1) electrical fields which can be effected by an object close enough to the detecting surface, a change in the capacitive coupling between the electrodes will be detected as the received signal strength will changes. By using, e.g. distance information from several electrodes xyz-coordinates of the object in the space above the electrodes can be determined. By modulating (2) the generated field, a radio signal 10 may be transmitted and information can be transmitted (3) to and from the communication device 400 to the haptic feedback element 450 or other devices adapted for this application. The feedback may be enabled, e.g. for when a user finger or a pointing device is located at a certain coordinate or position corresponding to a certain xyz position in the 3D user interface displayed in a 3D screen.

In one embodiment, a capacitive touch panel may include an insulating layer, a plurality of first dimensional conductive patterns, e.g. column conductive patterns, and a plurality of second dimensional conductive patterns, e.g. row conductive patterns. The column conductive patterns may be configured over an upper surface of the insulating layer and the row conductive patterns may be configured over a lower surface of the insulating layer. The column conductive patterns over the upper surface and the row conductive patterns over the lower surface form a vertical capacitance, and an ideal capacitance value may be obtained by adjusting the insulating layer. In addition, the column conductive patterns and the row conductive patterns may form horizontal capacitances respectively to achieve better detecting sensitivity. Therefore, a user touch may be sensed by detecting variance in capacitance values of the formed capacitance.

Clearly, other types of detection in a three-dimensional space may be used.

The radio frequency may also be substituted or combined with optical communication using e.g. Infra Red (IR), laser, etc. signals.

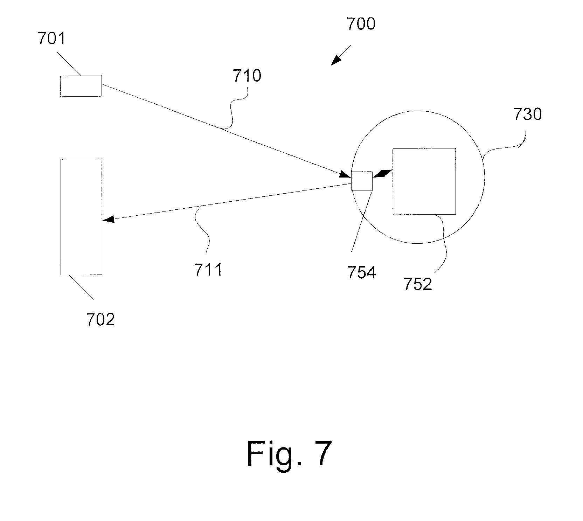

Fig. 7 illustrates an optical signal based system 700, e.g. for motion analyses. In this case an optical detection beam 710 is transmitted from an emitter 701, such as an IR transmitter/diode. A marker 730, for example, is arranged to reflect back the beam to a receiver 702. In case of using IR transmission, the marker 730 is provided with an IR-detector 754. Naturally, the type of detector may vary depending on the type of the optical signal. The IR detector 754 is connected to a controller 752. The transmitted detection beam 710 is modulated such that the wave may carry information. The detector 754 detects the beam and demodulates the signal to obtain necessary data. The beam may be reflected and detected by the detector 702. However, the marker may comprise a emitter to transmit a signal 711 detected by the detector 702. The signal 711 may be modulated to transmit information from the marker. The marker may further comprise electromechanical elements to generate mechanical motion as a haptic feedback.

The invention allows use of any type suitable analogue and/or digital modulations, such as:
Amplitude modulation (AM), Frequency modulation (FM), Phase modulation (PM), Phase-shift keying (PSK), Frequency-shift keying (FSK), Amplitude-shift keying (ASK), On-off keying (OOK), Quadrature amplitude modulation (QAM), Continuous phase modulation (CPM), Orthogonal frequency-division multiplexing (OFDM), Wavelet modulation, Trellis coded modulation (TCM), and Spread-spectrum techniques.

The invention may be utilized in conjunction with 3D imaging devices, such as 3D projectors or displays, to allow user interact with displayed content. In LCD display screens destined for, e.g. mobile phones or other portable devices, that are capable of showing 3D images the content may be projected and interlaced by two separate LCD displays, one of which outputs images for the left eye, and the other for the right eye. With each image subtly different in position, the technique uses these stereoscopic LCD displays to "fool" the eye into thinking it is a real 3D image that is being perceived. This is only one example of a 3D display and other types, such as digital holographic systems, stereo display based on DLP projection (e.g. for 3D projectors), and others, well known for skilled person may be used.

In an exemplary application using, for example a mobile communication device having a 3D display with ability to detect an object in 3D, a user may set an alarm time by turning a displayed hand of a watch and the information may be communicated to the wristwatch of the user. In another exemplary application a mobile device may be used to control a 3D projection where certain commands on the display may generate feedback elements on the user clothing, where the signals are generated by the mobile device.

It also should be apparent that data exchange between the devices may have other purposes than activating haptic feedback as exemplified above, e.g. for detecting user or device conditions, generating alarm, or any other data exchange.

The foregoing description of preferred embodiments of the embodiments provides illustration and description, but is not intended to be exhaustive or to limit the embodiments to the precise form disclosed. Modifications and variations are possible in light of the above teachings or may be acquired from practice of the embodiments.

While a series of acts has been described with regard to Fig. 5, the order of the acts may be modified in other implementations consistent with the principles of the embodiments. Further, non-dependent acts may be performed in parallel.

It will be apparent to one of ordinary skill in the art that aspects of the embodiments, as described above, may be implemented in many different forms of software, firmware, and hardware in the implementations illustrated in the figures. The actual software code or specialized control hardware used to implement aspects consistent with the principles of the embodiments is not limiting of the embodiments. Thus, the operation and behaviour of the aspects were described without reference to the specific software code--it being understood that one of ordinary skill in the art would be able to design software and control hardware to implement the aspects based on the description herein.

Further, certain portions of the embodiments may be implemented as "logic" that performs one or more functions. This logic may include hardware, such as hardwired logic, an application specific integrated circuit, a field programmable gate array or a microprocessor, software, or a combination of hardware and software.

It should be emphasized that the term "comprises/comprising" when used in this specification and/or claims is taken to specify the presence of stated features, integers, steps or components but does not preclude the presence or addition of one or more other features, integers, steps, components or groups thereof.

No element, act, or instruction used in the present application should be construed as critical or essential to the embodiments unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A user interaction arrangement (1711 ) for interaction with a user using a pointing object, said arrangement comprising: at least one transmitter (353, 403, 701) for generating a signal (10, 710) and at least one receiver (353, 403, 702) for receiving a signal (10, 711) in response to a remote detection of said object, ***characterised in* that** the transmitted signal is modulated to carry data to be received by said or other remote object.

2. The arrangement of claim 1, wherein a signal is modulated by the remote object to carry data to be received by the arrangement.

3. The arrangement of claim 1 or 2, wherein the signals are electromagnetic, including one or several of optical or radio waves.

4. The arrangement according to claim 1, comprising a capacitive electric field generator and receiver.

5. The arrangement according to claim 1, comprising an optical transmitter and receiver.

6. The arrangement according to any of preceding claims, wherein the transmitted signal comprises instructions for generating a feedback event.

7. The arrangement according to any of preceding claims, wherein the signal modulation is analogue and/or digital.

8. An electric device (100) comprising a display (140, 401), a communication portion (180) and a user interaction arrangement comprising (1711): at least one transmitter (353, 403, 701) for generating a signal (10, 710) and at least one receiver for receiving a signal (10, 711)I, the arrangement being configured to detect a pointing object for interaction with said device, the received signal being in response to a detected remote object, ***characterised in* that** the transmitted signal is modulated by the communication portion to carry data to be received by said or other remote object.

9. The device of claim 8, being one of a mobile communication terminal, a camera, a global positioning system (GPS) receiver; a personal communications system (PCS) terminal, a personal digital assistant (PDA); a personal computer, a home entertainment system or a television screen.

10. A device configured to be detected by means of an optical and/or electrical signal transmitted from a detecting device interacting with a user, ***characterised* by** a receiver for receiving the optical and/or electrical signal, which comprises modulated data and a processing unit for demodulating the signal.

11. The device of claim 10, further comprising means for generating a modulated signal for transmission to the detecting device.

12. The device of claim 10, further comprising a portion to generate an action with respect to received data.

13. The device of claim 12, wherein the action is a haptic feedback.

14. The device of claim 10, being one or several of a device built in into a user's cloths, a stylus, a watch, glove, ring, etc.

15. A method or providing data to a remote object, the method comprising: generating a signal for detecting the object, upon detection of the object transmitting the data over the signal by modulating the signal.
